# EUROPEAN PATENT APPLICATION

(11) **EP 4 492 887 A1**
(43) Date of publication of application: **15.01.2025**
(21) Application number: 23787431.8
(22) Date of filing: 07.03.2023
(51) Int. Cl.: H04W 68/02

(54) **PAGING METHOD AND APPARATUS**

(30) Priority: 11.04.2022 CN 202210377310
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); WU, Yiling, Shenzhen, Guangdong 518129 (CN)
(74) Representative: Körber, Martin Hans
(86) International application number: PCT/CN2023/080108
(87) International publication number: WO 2023/197783

(57) **Abstract**

This application relates to a paging method and an apparatus. A first device sends first signaling used to page a terminal device. The first signaling includes memory information or an identifier of the terminal device, to indicate the to-be-paged terminal device. In addition, the terminal device may further determine a first resource based on the first signaling, to send uplink data by using the first resource. The first device may also receive, on the first resource, the uplink data from the terminal device. That the terminal device may determine the first resource based on the first signaling is equivalent to that the first device allocates a resource to the terminal device. Since the resource used by the terminal device to send the uplink data has been allocated, the terminal device does not need to access the first device in a resource contention manner. Therefore, the terminal device does not need to perform a random access process. In this way, steps needing to be performed for data transmission between the terminal device and the first device are reduced. This helps reduce signaling overheads and reduce a data transmission delay.

## Description

### CROSS-REFERENCE TO RELATED APPLICATIONS

This application claims priority to Chinese Patent Application No. 202210377310.X, filed with the China National Intellectual Property Administration on April 11, 2022 and entitled "PAGING METHOD AND APPARATUS", which is incorporated herein by reference in its entirety.

### TECHNICAL FIELD

This application relates to the field of communication technologies, and in particular, to a paging method and an apparatus.

### BACKGROUND

A radio frequency identification (radio frequency identification, RFID) technology can be used to identify a user identity, and can also be used to read/write user data.

In an application scenario of the RFID technology, a tag (tag) may receive a radio frequency signal from a reader (or referred to as a reader), and the tag may send, by using energy obtained through an induced current, information stored in a chip inside the tag; or the tag may actively send a signal with a frequency to the reader. The reader may read the information from the tag, to complete identification of a user holding the tag, or complete reading or writing of data.

One reader can communicate with a plurality of tags. Before data transmission is performed between the reader and the tag, the tag needs to first establish a connection with the reader. In a process of establishing the connection, the reader may page a plurality of tags. After being paged, the plurality of tags need to contend for resources in a time division manner to access the reader. For example, after being paged, one tag may send one random number to the reader. If the reader receives the random number, the reader may send an acknowledgment message to the tag. That the tag receives the acknowledgment message is equivalent to establishing a connection with the reader. In this case, the tag may send data to the reader, and after receiving the data, the reader sends a message to the tag again, to indicate a manner of processing the data, for example, reading or writing. After the reader completes communication with one tag, a next tag can establish a connection with the reader.

It can be learned that a plurality of steps currently need to be performed for data transmission between the tag and the reader. If the process is applied to a cellular network, a long delay is caused, especially when there are a large quantity of tags.

### SUMMARY

Embodiments of this application provide a paging method and an apparatus, to reduce a data transmission delay.

According to a first aspect, a first paging method is provided. The method may be performed by a first device, may be performed by another device including a function of a first device, or may be performed by a chip system or another functional module. The chip system or the functional module can implement the function of the first device. For example, the chip system or the functional module is disposed in the first device. Optionally, the first device is, for example, an access network device like a base station; or the first device is, for example, a device having a read/write function like a reader. The method includes: sending first signaling, where the first signaling is used to page the first terminal device, the first signaling includes information about the first terminal device, and the first signaling is used to determine a first resource; and receiving, on the first resource, uplink data from the first terminal device.

In this embodiment of this application, the first device can clearly determine whether to page one terminal device or a plurality of terminal devices. Therefore, the first signaling sent by the first device may be used to determine the first resource. The paged terminal device only needs to send the uplink data to the first device by using the first resource, and does not need to perform access in a contention manner. Therefore, the paged terminal device does not need to perform a random access process. For example, after receiving the first signaling used to page the first terminal device, the first terminal device may send the uplink data to the first device by using the first resource, and does not need to perform a step of establishing a connection with the first device. In this way, steps needing to be performed for data transmission between the first terminal device and the first device are reduced. This helps reduce signaling overheads and reduce a data transmission delay.

In an optional implementation, the method further includes: sending a first signal. The first signal is used to provide energy for the first terminal device to send the uplink data. If a capability of the first terminal device is low, for example, the first terminal device is a passive tag, the first terminal device may not be able to actively send data to the outside. Therefore, the first device may send the signal, so that the first terminal device obtains the energy and sends the uplink data by using the obtained energy.

In an optional implementation, the first terminal device works in a backscatter communication scenario. For example, the first terminal device is a passive tag, and may obtain energy by backscattering a signal from the outside, to send the uplink data. Alternatively, the first terminal device may work in another communication scenario. For example, if the first terminal device is an active tag or the like, the first terminal device can send the uplink data with no needing excitation of an external signal. This can simplify a data transmission process. This is not limited in this embodiment of this application.

In an optional implementation, the method further includes: receiving second signaling from a first core network device. The second signaling is used to page the first terminal device, and the second signaling further indicates that a quantity of terminal devices paged by the first signaling is 1, or indicates that a quantity of terminal devices paged by the first signaling is greater than 1. The first core network device is, for example, an AMF. A core network may initiate paging. In this case, the first core network device may send the second signaling to the first device to page the first terminal device. The first core network device may indicate whether the quantity of terminal devices paged by the first signaling is 1 or greater than 1, so that the first device can determine the quantity of to-be-paged terminal devices based on the indication of the first core network device.

In an optional implementation, the second signaling includes a first field. When a value of the first field is a first value, it indicates that the quantity of terminal devices paged by the first signaling is 1, or when a value of the first field is a second value, it indicates that the quantity of terminal devices paged by the first signaling is greater than 1. Alternatively, when the second signaling includes a first field, it indicates that the quantity of terminal devices paged by the first signaling is 1, or when the second signaling does not include a first field, it indicates that the quantity of terminal devices paged by the first signaling is greater than 1. Alternatively, the second signaling includes a NAS container, and the NAS container is used to carry the information about the first terminal device. When a quantity of NAS containers is 1, it indicates that the quantity of terminal devices paged by the first signaling is 1, or when a quantity of NAS containers is greater than 1, it indicates that the quantity of terminal devices paged by the first signaling is greater than 1. Alternatively, the information about the first terminal device is an identifier of the first terminal device. When a quantity of terminal device identifiers included in the second signaling is 1, it indicates that the quantity of terminal devices paged by the first signaling is 1, or when a quantity of terminal device identifiers included in the second signaling is greater than 1, it indicates that the quantity of terminal devices paged by the first signaling is greater than 1. The second signaling may indicate, in an explicit manner, or may indicate, in an implicit manner, whether the quantity of terminal devices paged by the first signaling is 1 or greater than 1. For example, in the explicit manner, the first field is used for indication, so that the indication is clear. In the implicit manner, the NAS container or the identifier of the terminal device is used for indication, so that whether the quantity of terminal devices paged by the first signaling is 1 or greater than 1 is indicated, and overheads of the second signaling are also reduced.

In an optional implementation, when the value of the first field is the second value, and the second signaling includes one NAS container, the second value indicates the quantity of terminal devices paged by the first signaling. If the value of the first field is the second value, it indicates that the quantity of terminal devices paged by the first signaling is greater than 1. However, if the second signaling includes only one NAS container, the second signaling cannot represent, by using the quantity of NAS containers, the quantity of terminal devices paged by the first signaling. To enable the first device to determine an actual quantity of terminal devices paged by the first signaling, the second value in this case may indicate the quantity of terminal devices paged by the first signaling. In this way, the first device can not only determine that the quantity of terminal devices paged by the first signaling is greater than 1, but also determine the actual quantity of terminal devices paged by the first signaling. This helps the first device configure, for the terminal devices paged by the first signaling, a resource used to send uplink data, so that the terminal devices do not need to access the first device in a contention manner. This reduces a data transmission delay.

In an optional implementation, the first signaling includes a second field. When a value of the second field is a third value, it indicates that the quantity of terminal devices paged by the first signaling is 1, or when a value of the second field is a fourth value, it indicates that the quantity of terminal devices paged by the first signaling is greater than 1. Alternatively, when the first signaling includes a second field, it indicates that the quantity of terminal devices paged by the first signaling is 1, or when the first signaling does not include a second field, it indicates that the quantity of terminal devices paged by the first signaling is greater than 1. Alternatively, when the first resource includes one resource used for uplink data transmission, it indicates that the quantity of terminal devices paged by the first signaling is 1, or when the first resource includes a plurality of resources used for uplink data transmission, it indicates that the quantity of terminal devices paged by the first signaling is greater than 1. Alternatively, the first signaling includes a NAS container, and the NAS container is used to carry the information about the terminal device. When a quantity of NAS containers is 1, it indicates that the quantity of terminal devices paged by the first signaling is 1, or when a quantity of NAS containers is greater than 1, it indicates that the quantity of terminal devices paged by the first signaling is greater than 1. Alternatively, the information about the terminal device is the identifier of the terminal device. When a quantity of terminal device identifiers included in the first signaling is 1, it indicates that the quantity of terminal devices paged by the first signaling is 1, or when a quantity of terminal device identifiers included in the first signaling is greater than 1, it indicates that the quantity of terminal devices paged by the first signaling is greater than 1.

In an optional implementation, when the quantity of terminal devices paged by the first signaling is greater than 1, the first signaling includes information about a plurality of terminal devices, the plurality pieces of information about the terminal devices are sorted in a first order in the first signaling, and the first order is used to determine a resource. For example, in the first signaling, the plurality pieces of information about the terminal devices are sorted in the first order. In this case, for one terminal device paged by the first signaling, a ranking (or a sequence number or a location) of information about the terminal device in the first order may be determined, and one resource used by the terminal device in the first resource may be determined based on the ranking. In this manner, the paged terminal device may determine, in combination with the first signaling, the resource used by the terminal device in the first resource, so that the paged terminal device can send the uplink data on the resource configured for the terminal device. Therefore, each paged terminal device can send uplink data on a resource of each terminal device. These terminal devices do not need to contend for the resource, and therefore do not need to perform a contention access step. This simplifies a data transmission process and reduces a data transmission delay.

In an optional implementation, that the plurality pieces of information about the terminal devices are sorted in a first order in the first signaling includes: when one NAS container in NAS containers included in the first signaling is used to carry information about one terminal device, the NAS containers are sorted in the first order in the first signaling; when the quantity of NAS containers included in the first signaling is 1, the plurality pieces of information about the terminal devices are sorted in the first order in the NAS container; or identifiers of the plurality of terminal devices are sorted in the first order in the first signaling. The plurality pieces of information about the terminal devices may be included in one or more NAS containers. In this case, that the plurality pieces of information about the terminal devices are sorted in the first signaling may be that the NAS containers are sorted in the first signaling, or the plurality pieces of information about the terminal devices are sorted in the NAS container. Alternatively, the plurality pieces of information about the terminal devices may not be included in one or more NAS containers. In this case, the plurality pieces of information about the terminal devices may be directly sorted in the first signaling.

In an optional implementation, if the quantity of terminal devices paged by the first signaling is greater than 1, the method further includes: The first device sends third signaling after completing data transmission with one of the plurality of terminal devices paged by the first signaling. The third signaling is used to trigger a next terminal device in the plurality of terminal devices to send uplink data, used to trigger a next resource included in the first resource, or used to trigger a next time unit (for example, a time domain resource included in one resource is one time unit) included in the first resource. For example, the terminal device paged by the first signaling is a passive tag. For a terminal device of this type, a capability is low, and it may be not able to determine when a resource configured for the terminal device arrives. Therefore, the first device may send the third signaling, and the paged terminal device can determine, based on a quantity of received third signaling and a ranking of information about the terminal device in the first order, a specific time domain location of the resource allocated to the terminal device.

In an optional implementation, the uplink data from the first terminal device includes the identifier of the first terminal device. When sending uplink data to the first device, one terminal device may further carry an identifier of the terminal device, so that the first device can determine a terminal device from which the uplink data comes.

In an optional implementation, the identifier of the first terminal device is an EPC, an S-TMSI, or a 5G-S-TMSI. An identifier of a terminal device is not limited in this embodiment of this application.

According to a second aspect, a second paging method is provided. The method may be performed by a first terminal device, may be performed by another device including a function of a first terminal device, or may be performed by a chip system or another functional module. The chip system or the functional module can implement the function of the first terminal device. For example, the chip system or the functional module is disposed in the first terminal device. The method includes: receiving first signaling from a first device, where the first signaling is used to page the first terminal device, the first signaling includes information about the first terminal device, and the first signaling is used to determine a first resource; and sending, based on an indication of the first signaling, uplink data to the first device in a first slot, where the first slot belongs to the first resource.

In an optional implementation, the method further includes: receiving a first signal from the first device; and the sending uplink data to the first device in a first slot, includes: sending the uplink data to the first device in the first slot by using energy obtained by using the first signal.

In an optional implementation, the first terminal device works in a backscatter communication scenario.

In an optional implementation, the first signaling includes a second field. When a value of the second field is a third value, it indicates that a quantity of terminal devices paged by the first signaling is 1, or when a value of the second field is a fourth value, it indicates that a quantity of terminal devices paged by the first signaling is greater than 1. Alternatively, when the first signaling includes a second field, it indicates that a quantity of terminal devices paged by the first signaling is 1, or when the first signaling does not include a second field, it indicates that a quantity of terminal devices paged by the first signaling is greater than 1. Alternatively, when the first resource includes one resource used for uplink data transmission, it indicates that a quantity of terminal devices paged by the first signaling is 1, or when the first resource includes a plurality of resources used for uplink data transmission, it indicates that a quantity of terminal devices paged by the first signaling is greater than 1. Alternatively, the first signaling includes a NAS container, and the NAS container is used to carry the information about the terminal device. When a quantity of NAS containers is 1, it indicates that a quantity of terminal devices paged by the first signaling is 1, or when a quantity of NAS containers included in the first signaling is greater than 1, it indicates that a quantity of terminal devices paged by the first signaling is greater than 1. Alternatively, the information about the terminal device is an identifier of the terminal device. When a quantity of terminal device identifiers included in the first signaling is 1, it indicates that a quantity of terminal devices paged by the first signaling is 1, or when a quantity of terminal device identifiers included in the first signaling is greater than 1, it indicates that a quantity of terminal devices paged by the first signaling is greater than 1.

In an optional implementation, the method further includes: determining the first slot based on a location of the information about the first terminal device in the first signaling in a first order. When the quantity of terminal devices paged by the first signaling is greater than 1, the first signaling includes information about a plurality of terminal devices, and the plurality pieces of information about the terminal devices are sorted in the first order in the first signaling.

In an optional implementation, that the plurality pieces of information about the terminal devices are sorted in the first order in the first signaling includes: when one NAS container in NAS containers included in the first signaling is used to carry information about one terminal device, the NAS containers are sorted in the first order in the first signaling; when the quantity of NAS containers included in the first signaling is 1, the plurality pieces of information about the terminal devices are sorted in the first order in the NAS container; or identifiers of the plurality of terminal devices are sorted in the first order in the first signaling.

In an optional implementation, if the quantity of terminal devices paged by the first signaling is greater than 1, the method further includes: receiving third signaling. The third signaling is used to trigger a next terminal device in the plurality of terminal devices paged by the first signaling to send uplink data. The sending the uplink data to the first device in the first slot by using energy obtained by using the first signal includes: if the third signaling is an N^{th} piece of signaling received by the first terminal device to trigger a next terminal device in the plurality of terminal devices paged by the first signaling to send uplink data, and N represents the location of the information about the first terminal device in the first order, sending the uplink data to the first device in the first slot by using the energy obtained by using the first signal. The first slot is an N^{th} slot in the first resource, and N is a positive integer.

For technical effects brought by the second aspect or the optional implementations, refer to descriptions of technical effects brought by the first aspect or the corresponding implementations.

According to a third aspect, a third paging method is provided. The method may be performed by a first core network device, may be performed by another device including a function of a first core network device, or may be performed by a chip system or another functional module. The chip system or the functional module can implement the function of the first core network device. For example, the chip system or the functional module is disposed in the first core network device. Optionally, the first core network device is, for example, an AMF. The method includes: receiving fourth signaling from a second core network device, where the fourth signaling is used to page a first terminal device, and the fourth signaling indicates that a quantity of terminal devices paged by second signaling is 1, or indicates that a quantity of terminal devices paged by second signaling is greater than 1; and sending the second signaling to a first device, where the second signaling is used to page the first terminal device, and the second signaling further indicates that a quantity of terminal devices paged by first signaling is 1, or indicates that a quantity of terminal devices paged by first signaling is greater than 1. In this embodiment of this application, the second signaling from the second core network device may indicate whether the quantity of to-be-paged terminal devices is 1 or greater than 1, so that the first core network device can determine the quantity of to-be-paged terminal devices. In this case, when performing paging, the first core network device may also indicate, in the second signaling, whether the quantity of to-be-paged terminal devices is 1 or greater than 1, in other words, indicate whether one or more terminal devices are paged. For example, the first core network device indicates, to the first device, whether the quantity of to-be-paged terminal devices is 1 or greater than 1. In this case, signaling (for example, the first signaling) sent by the first device may be used to determine a first resource, and the terminal device only needs to send uplink data to the first device by using the first resource, and does not need to perform access in a contention manner. Therefore, the terminal device does not need to perform a random access process. In this way, steps needing to be performed for data transmission between the terminal device and the first device are reduced. This helps reduce signaling overheads and reduce a data transmission delay.

In an optional implementation, the fourth signaling includes a third field. When a value of the third field is a fifth value, it indicates that the quantity of terminal devices paged by the second signaling is 1, or when a value of the third field is a sixth value, it indicates that the quantity of terminal devices paged by the second signaling is greater than 1. Alternatively, when the fourth signaling includes a third field, it indicates that the quantity of terminal devices paged by the second signaling is 1, or when the second signaling does not include a third field, it indicates that the quantity of terminal devices paged by the second signaling is greater than 1. Alternatively, the fourth signaling includes an identifier of the first terminal device. When a quantity of terminal device identifiers included in the fourth signaling is 1, it indicates that the quantity of terminal devices paged by the second signaling is 1, or when a quantity of terminal device identifiers included in the fourth signaling is greater than 1, it indicates that the quantity of terminal devices paged by the second signaling is greater than 1. The fourth signaling may indicate, in an explicit manner, or may indicate, in an implicit manner, whether the quantity of terminal devices paged by the second signaling is 1 or greater than 1. For example, in the explicit manner, the third field is used for indication, so that the indication is clear. In the implicit manner, the identifier of the terminal device is used for indication, so that whether the quantity of terminal devices paged by the second signaling is 1 or greater than 1 is indicated, and overheads of the fourth signaling are also reduced.

In an optional implementation, the second signaling includes a first field. When a value of the first field is a first value, it indicates that the quantity of terminal devices paged by the first signaling is 1, or when a value of the first field is a second value, it indicates that the quantity of terminal devices paged by the first signaling is greater than 1. Alternatively, when the second signaling includes a first field, it indicates that the quantity of terminal devices paged by the first signaling is 1, or when the second signaling does not include a first field, it indicates that the quantity of terminal devices paged by the first signaling is greater than 1. Alternatively, the second signaling includes a NAS container, and the NAS container is used to carry information about the first terminal device. When a quantity of NAS containers is 1, it indicates that the quantity of terminal devices paged by the first signaling is 1, or when a quantity of NAS containers included in the second signaling is greater than 1, it indicates that the quantity of terminal devices paged by the first signaling is greater than 1. Alternatively, the information about the first terminal device is the identifier of the first terminal device. When a quantity of terminal device identifiers included in the second signaling is 1, it indicates that the quantity of terminal devices paged by the first signaling is 1, or when a quantity of terminal device identifiers included in the second signaling is greater than 1, it indicates that the quantity of terminal devices paged by the first signaling is greater than 1.

In an optional implementation, when the value of the first field is the second value, and the second signaling includes one NAS container, the second value indicates the quantity of terminal devices paged by the second signaling.

For technical effects brought by the third aspect or some optional implementations, refer to descriptions of technical effects brought by the first aspect or the corresponding implementations.

According to a fourth aspect, a fourth paging method is provided. The method may be performed by a second core network device, may be performed by another device including a function of a second core network device, or may be performed by a chip system or another functional module. The chip system or the functional module can implement the function of the second core network device. For example, the chip system or the functional module is disposed in the second core network device. Optionally, the second core network device is, for example, an AF or an NEF. The method includes: sending fourth signaling to a first core network device. The fourth signaling is used to page a first terminal device, and the fourth signaling indicates that a quantity of terminal devices paged by second signaling is 1, or indicates that a quantity of terminal devices paged by second signaling is greater than 1.

In an optional implementation, the fourth signaling includes a third field. When a value of the third field is a fifth value, it indicates that the quantity of terminal devices paged by the second signaling is 1, or when a value of the third field is a sixth value, it indicates that the quantity of terminal devices paged by the second signaling is greater than 1. Alternatively, when the fourth signaling includes a third field, it indicates that the quantity of terminal devices paged by the second signaling is 1, or when the second signaling does not include a third field, it indicates that the quantity of terminal devices paged by the second signaling is greater than 1. Alternatively, the fourth signaling includes an identifier of the first terminal device. When a quantity of terminal device identifiers included in the fourth signaling is 1, it indicates that the quantity of terminal devices paged by the second signaling is 1, or when a quantity of terminal device identifiers included in the fourth signaling is greater than 1, it indicates that the quantity of terminal devices paged by the second signaling is greater than 1.

For technical effects brought by the fourth aspect or the optional implementations, refer to descriptions of technical effects of the first aspect or the corresponding implementations, and/or refer to descriptions of technical effects of the third aspect or the corresponding implementations.

According to a fifth aspect, a communication apparatus is provided. The communication apparatus may be the first device according to any one of the first aspect to the fourth aspect. The communication apparatus has a function of the foregoing first device. The communication apparatus is, for example, the first device, a large device including the first device, or a functional module in the first device, for example, a baseband apparatus or a chip system. The first device is, for example, an access network device like a base station; or the first device is, for example, a device having a read/write function like a reader. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

For example, the transceiver unit (or the sending unit) is configured to send first signaling. The first signaling is used to page a first terminal device, the first signaling includes information about the first terminal device, and the first signaling is used to determine a first resource. The transceiver unit (or the receiving unit) is configured to receive, on the first resource, uplink data from the first terminal device.

In an optional implementation, the communication apparatus further includes a storage unit (sometimes referred to as a storage module). The processing unit is configured to be coupled to the storage unit, and execute a program or instructions in the storage unit, so that the communication apparatus performs a function of the first device according to any one of the first aspect to the fourth aspect.

According to a sixth aspect, a communication apparatus is provided. The communication apparatus may be the first terminal device according to any one of the first aspect to the fourth aspect. The communication apparatus has a function of the foregoing first terminal device. The communication apparatus is, for example, the first terminal device, a large device including the first terminal device, or a functional module in the first terminal device, for example, a baseband apparatus or a chip system. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fifth aspect.

For example, the transceiver unit (or a receiving unit) is configured to receive first signaling from a first device. The first signaling is used to page the first terminal device, the first signaling includes information about the first terminal device, and the first signaling is used to determine a first resource. The processing unit is configured to send, based on an indication of the first signaling, uplink data to the first device in a first slot by using the transceiver unit (or a sending unit). The first slot belongs to the first resource.

In an optional implementation, the communication apparatus further includes a storage unit (sometimes referred to as a storage module). The processing unit is configured to be coupled to the storage unit, and execute a program or instructions in the storage unit, so that the communication apparatus performs the function of the first terminal device according to any one of the first aspect to the fourth aspect.

According to a seventh aspect, a communication apparatus is provided. The communication apparatus may be the first core network device according to any one of the first aspect to the fourth aspect. The communication apparatus has a function of the foregoing first core network device. The communication apparatus is, for example, the first core network device, a large device including the first core network device, or a functional module in the first core network device, for example, a baseband apparatus or a chip system. Optionally, the first core network device is, for example, an AMF. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fifth aspect.

For example, the transceiver unit (or a receiving unit) is configured to receive fourth signaling from a second core network device. The fourth signaling is used to page a first terminal device, and the fourth signaling indicates that a quantity of terminal devices paged by second signaling is 1, or indicates that a quantity of terminal devices paged by second signaling is greater than 1. The transceiver unit (or a sending unit) is configured to send the second signaling to a first device. The second signaling is used to page the first terminal device, and the second signaling further indicates that a quantity of terminal devices paged by the first signaling is 1, or indicates that a quantity of terminal devices paged by the first signaling is greater than 1.

In an optional implementation, the communication apparatus further includes a storage unit (sometimes referred to as a storage module). The processing unit is configured to be coupled to the storage unit, and execute a program or instructions in the storage unit, so that the communication apparatus performs the function of the first core network device according to any one of the first aspect to the fourth aspect.

According to an eighth aspect, a communication apparatus is provided. The communication apparatus may be the second core network device according to any one of the first aspect to the fourth aspect. The communication apparatus has a function of the foregoing second core network device. The communication apparatus is, for example, the second core network device, a large device including the second core network device, or a functional module in the second core network device, for example, a baseband apparatus or a chip system. Optionally, the second core network device is, for example, an AF or an NEF. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fifth aspect.

For example, the transceiver unit (or a sending unit) is configured to send fourth signaling to a first core network device. The fourth signaling is used to page a first terminal device, and the fourth signaling indicates that a quantity of terminal devices paged by second signaling is 1, or indicates that a quantity of terminal devices paged by second signaling is greater than 1.

In an optional implementation, the communication apparatus further includes a storage unit (sometimes referred to as a storage module). The processing unit is configured to be coupled to the storage unit, and execute a program or instructions in the storage unit, so that the communication apparatus performs a function of the second core network device according to any one of the first aspect to the fourth aspect.

According to a ninth aspect, a communication system is provided. The communication system includes the communication apparatus according to the fifth aspect and the communication apparatus according to the sixth aspect.

Optionally, the communication system further includes the communication apparatus according to the seventh aspect.

Optionally, the communication system further includes the communication apparatus according to the eighth aspect.

According to a tenth aspect, a computer-readable storage medium is provided. The computer-readable storage medium is configured to store a computer program or instructions. When the computer program or the instructions are run, the method performed by the first device, the first terminal device, the first core network device, or the second core network device according to the foregoing aspects is implemented.

According to an eleventh aspect, a computer program product including instructions is provided. When the computer program product runs on a computer, the methods according to the foregoing aspects are implemented.

According to a twelfth aspect, a chip system is provided. The chip system includes a processor and an interface. The processor is configured to invoke instructions from the interface and run the instructions, so that the chip system implements the methods according to the foregoing aspects.

### BRIEF DESCRIPTION OF DRAWINGS

FIG. 1 shows a method for communication between a tag and a reader;
FIG. 2, FIG. 3A, and FIG. 3B are diagrams of two application scenarios according to embodiments of this application;
FIG. 4 is a flowchart of a paging method according to an embodiment of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms or concepts in embodiments of this application, to facilitate understanding by a person skilled in the art.

An RFID tag, or referred to as an electronic tag or a tag, is a common name of RFID. A design of the tag is simple. Application layer signaling and air interface signaling are integrated to design the tag. The tag mainly performs encoding/decoding and transmission based on binary on-off keying (on-off keying, OOK). In other words, in an amplitude modulation mode of data, the data is decoded by using a high/low level. In a communication process of the tag, distinguishing frequency domain and code domain is not supported, and parallel performance is poor. If a plurality of tags need to perform communication, for example, the plurality of tags need to communicate with a reader, a time division multiplexing manner is used, and the plurality of tags communicate with the reader by using a serial process. The tag may be regarded as a terminal device.

In addition, radio frequency identification technologies may be classified into three types: active, passive and semi-active. A tag in an active radio frequency identification technology may have a built-in battery, and a tag of this type may actively send a signal to a reader with no need for obtaining, based on a received signal, energy for sending the signal. A tag in a passive radio frequency identification technology may also be referred to as a passive internet of things (passive IOT), that is, a passive internet of things device. A tag of this type may not have a built-in module such as a battery, or a battery module has small power. The tag of this type may obtain energy by using a received signal, and send a signal by using the energy. It may be understood as that a passive tag works in a backscatter communication scenario. In other words, the passive tag obtains energy by backscattering a signal from a reader, to perform data transmission. A tag in a semi-active radio frequency identification technology integrates advantages of an active tag and a passive tag, and may be used as a special marker. In normal cases, a tag of this type is in a dormant state, may not work and not send a signal to the outside. The tag starts to work only in a case in which the tag is activated when entering an activated signal range of a low-frequency activator. The tag in embodiments of this application may be an active tag, a passive tag, a semi-active tag, or the like.

The reader is a device reading (or writing) tag information in a handheld manner or a fixed manner. Alternatively, the reader may be understood as a device communicating with the tag. An implementation form of the reader may be a terminal device, may be an access network device, for example, a base station, or may be a device having a read/write function.

An integrated access backhaul (integrated access backhaul, IAB) node (node)/helper(helper)/excitation source may be implemented by using the terminal device, or may be implemented by using the access network device (for example, the base station). Bidirectional communication may be performed between the node and the tag. Alternatively, only downlink data may exist between the node and the tag. In other words, the node can send information to the tag, but the tag cannot send information to the node. Bidirectional communication may be performed between the node and the reader, and the communication may be performed through an air interface, or may be performed in a wired manner.

The terminal device is a device having a wireless transceiver function, and may be a fixed device, a mobile device, a handheld device (for example, a mobile phone), a wearable device, an in-vehicle device, or a wireless apparatus (for example, a communication module, a modem, or a chip system) built in the foregoing device. For example, the tag may be a fixed device or a mobile device in the terminal device, or a wireless apparatus built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, smart city (smart city), uncrewed aerial vehicle, robot, and the like scenarios. The terminal device may be sometimes referred to as a user equipment (user equipment, UE), a terminal, an access station, a UE station, a remote station, a wireless communication device, a user apparatus, or the like. For ease of description, in embodiments of this application, an example in which the terminal device is the UE is used for description.

A network device in embodiments of this application may include, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), and a base station evolved after a 3rd generation partnership project (3rd generation partnership project, 3GPP), an access point (access point, AP), a wireless relay node, a wireless backhaul node, or the like in a wireless fidelity (wireless fidelity, Wi-Fi) system. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, a network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices implementing core network functions in systems of different access technologies may be different. This is not limited in embodiments of this application. A 5G system is used as an example. The core network device includes an access and mobility management function (access and mobility management function, AMF), a session management function (session management function, SMF), a network exposure function (network exposure function, NEF), an application function (application function, AF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" generally represents an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, orders, a time sequence, priorities, importance degrees, or the like of the plurality of objects. For example, first signaling and second signaling may be same signaling, or may be different signaling. In addition, this name does not indicate that content, information amounts, sending orders, transmitting ends/receiving ends, priorities, importance degrees, or the like of the two pieces of signaling are different. In addition, step numbers in embodiments described in this application are merely used to distinguish between different steps, but are not used to limit an order of the steps. For example, S401 may occur before S402, may occur after S402, or may occur simultaneously with S402.

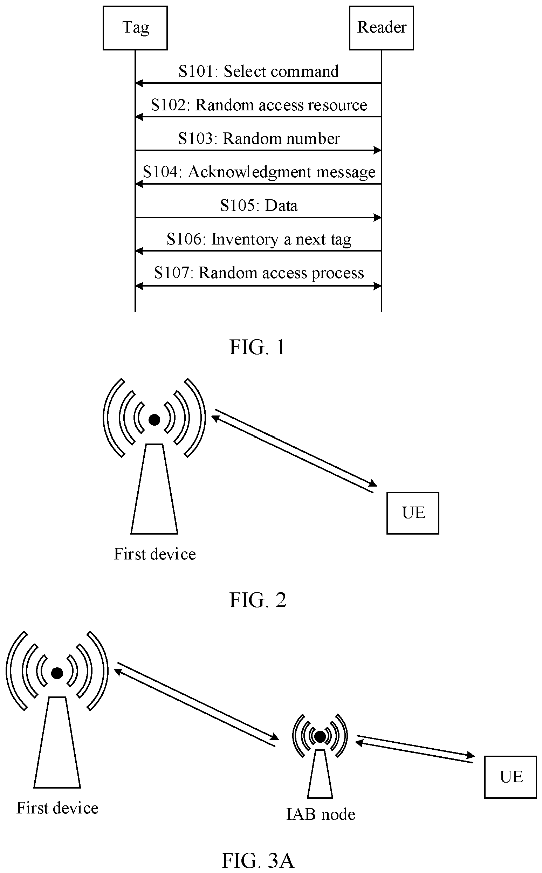

First, a current method for communication between a tag and a reader is described. FIG. 1 is a flowchart of the method.

S101: A reader sends a select (select) command.

The select command may be used to select (or page) one tag or a group of tags. In this communication scenario, all tags covered by the reader can receive the select command. In FIG. 1, an example in which one of the tags receives the select command is used.

The select command may include memory information of a to-be-paged tag.

S102: The reader configures a random access resource for the tag.

For example, the reader may send information used to configure the random access resource. In this communication scenario, all tags covered by the reader can receive the information. In FIG. 1, an example in which one of the tags receives the information is used. Because each tag selects, from the random access resource configured by the reader, a slot for access, the random access resource configured by the reader is, for example, a maximum access slot range. When selecting a slot, the tag needs to perform selection from the maximum access slot range. For example, the maximum slot range is a slot t₁ to a slot tₙ. In this case, an earliest slot that can be selected by the tag is the slot t₁, and a latest slot is the slot tₙ. Alternatively, the reader may also configure a parameter Q, and the tag may calculate a maximum access slot range based on the parameter Q.

S103: The tag sends a random number (random number, RN) to the reader. Correspondingly, the reader receives the random number from the tag. The random number is, for example, 16.

After one tag receives the select command in S101, if it is determined that the select command includes memory information of the tag, it is determined that the tag is paged. For example, the tag to be paged by the reader is a tag disposed on a product, and the memory information of the tag may indicate a feature such as a category of the product to which the tag belongs. The memory information included in the select command is, for example, the category of the product, for example, a clothing category. After the tag receives the select command, if the memory information of the tag indicates that the category of the product to which the tag belongs is a clothing category, it may be determined that the tag is selected (or paged). In this case, the tag may select one slot from the random access resource configured by the reader, and in the slot, the tag may send one random number to the reader.

The slot herein may not be a time unit having a fixed length, but an access opportunity triggered by signaling. Each piece of signaling triggers one access opportunity, and one access opportunity may be understood as one slot.

Because paged tags select slots respectively, different tags may select a same slot. If a plurality of tags send random numbers to the reader in a same slot, all the sending may fail, and corresponding tags may select slots again to send random numbers.

The random number sent by the tag to the reader may be carried in a message for sending, and a function of the message may be similar to a function of a third message (Msg3) in a random access process.

S104: The reader sends an acknowledgment message to the tag. Correspondingly, the tag receives the acknowledgment message from the reader.

If the reader successfully receives one random number, the reader may send an acknowledgment message to a transmitting end of the random number, to indicate that the random number is successfully received. The acknowledgment message may include the random number in S 103. In other words, the reader may send the random number from the tag to the tag again, to indicate acknowledgment that the random number is received.

A function of the acknowledgment message may be similar to a function of a fourth message (Msg4) in the random access process.

S105: The tag sends data to the reader. Correspondingly, the reader receives the data from the tag.

S101 to S105 are performed, so that one tag establishes a connection with the reader, in other words, one tag accesses the reader. After the access succeeds, the tag may send the data to the reader. For example, the sent data includes an electronic product code (electronic product code, EPC) or the like of the tag.

S106: The reader inventories a next tag.

After a communication process between the reader and one tag ends, the reader continues to process an access procedure of the next tag. For example, the reader may send trigger signaling, to trigger the next tag to access the reader.

S107: A random access process.

This is the random access process of the next tag. For example, the random access process of the next tag may include S103 to S105. After a communication process between the reader and the next tag ends, the reader continues to process an access procedure of a subsequent tag. The rest may be deduced by analogy.

It can be seen that, to perform data transmission with the reader currently, the tag needs to first access the reader, and an entire process includes a plurality of steps. If the process is applied to a cellular network, a long delay is caused. Especially when there are a large quantity of tags, a delay problem is more prominent.

In view of this, the technical solutions in embodiments of this application are provided. In this embodiment of this application, a first device can clearly determine whether to page one UE or a plurality of UEs. Therefore, first signaling sent by the first device may be used to determine a first resource. The UE only needs to send uplink data to the first device by using the first resource, and does not need to perform access in a contention manner. Therefore, the UE does not need to perform a process similar to random access. For example, after receiving the first signaling used to page the UE, the UE may send the uplink data to the first device by using the first resource, and does not need to perform a step of establishing a connection with the first device. In this way, steps needing to be performed for data transmission between the UE and the first device. This helps reduce signaling overheads and reduce a data transmission delay.

The technical solutions provided in embodiments of this application may be applied to a 4th generation (the 4th generation, 4G) communication system, for example, a long term evolution (long term evolution, LTE) system, may be applied to a 5th generation (the 5th generation, 5G) communication system, for example, new radio (new radio, NR), or may be applied to a future communication system, for example, a 6G system.

FIG. 2 is a diagram of an application scenario according to an embodiment of this application. FIG. 2 includes a first device and a UE. The first device is, for example, an access network device (for example, a base station or an access point), and the access network device may implement a function of a reader, or may not implement a function of a reader. Alternatively, the first device is, for example, a terminal device, and the terminal device implements a function of a reader.

If the first device is the base station, the UE may communicate with the first device through a Uu interface, or if the first device is the access point, the UE may communicate with the first device through a sidelink (sidelink, SL). In addition, if the first device is the terminal device, the first device may alternatively be connected to an access network device, and communicate with the access network device through a Uu interface. For example, the first device communicates with a core network via the access network device.

FIG. 3A is a diagram of another application scenario according to an embodiment of this application. FIG. 3A includes a first device, an IAB node, and a UE. As shown in FIG. 3A, bidirectional communication may be performed between the IAB node and the UE; or only unidirectional communication may be performed between the IAB node and the UE. If the bidirectional communication may be performed between the IAB node and the UE, the IAB node may be considered as a relay node between the first device and the UE, and both uplink and downlink data of the UE may be forwarded via the IAB node. Alternatively, if only the unidirectional communication may be performed between the IAB node and the UE, for example, the IAB node may send information to the UE, but the UE cannot send information to the IAB node, the IAB node may be considered as a relay node between the first device and the UE during downlink data transmission, and downlink data from the first device may reach the UE after being forwarded by the IAB node; while during uplink data transmission, the UE may directly send uplink data to the first device without passing through the IAB node.

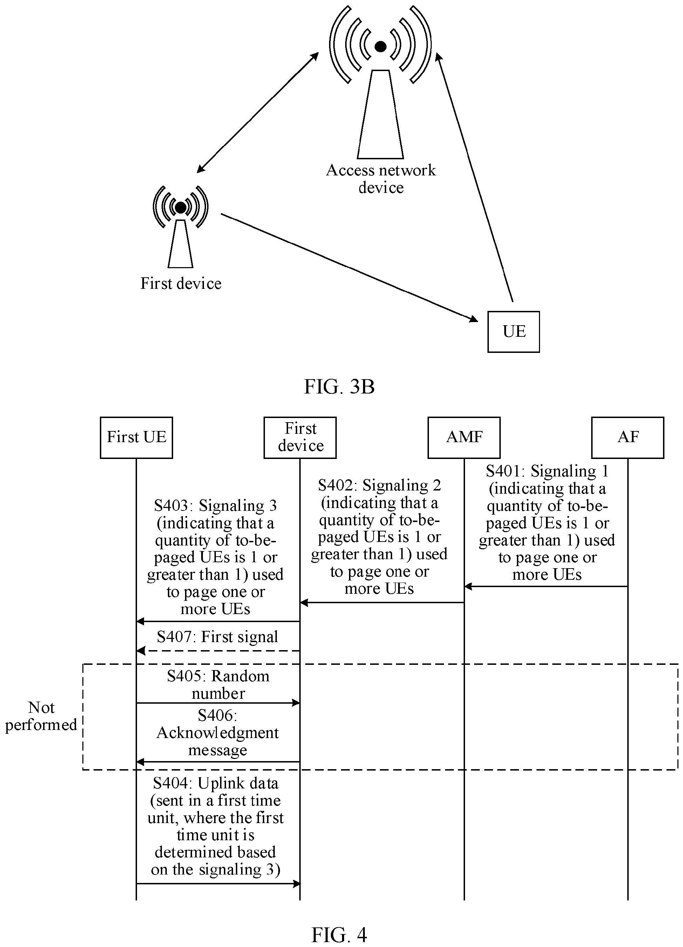

FIG. 3B is a diagram of still another application scenario according to an embodiment of this application. FIG. 3B includes a first device, an access network device, and a UE, and an example in which the first device is not an access network device is used. For example, the first device may directly communicate with the UE, or the first device may communicate with the UE via the access network device. The first device and/or the access network device can be connected to a core network.

For an implementation form of the first device in FIG. 3A or FIG. 3B, refer to descriptions of the scenario shown in FIG. 2.

To better describe embodiments of this application, the following describes methods provided in embodiments of this application with reference to accompanying drawings. In the accompanying drawings corresponding to embodiments of this application, all optional steps are represented by dashed lines. The methods provided in embodiments of this application may be applied to the scenario shown in FIG. 2, FIG. 3A, or FIG. 3B. For example, the first device in embodiments of this application is, for example, the first device in FIG. 2, FIG. 3A, or FIG. 3B. For details, refer to the foregoing descriptions. The UE in embodiments of this application is, for example, the UE in FIG. 2, FIG. 3A, or FIG. 3B. In addition, embodiments of this application further relate to a first core network device and a second core network device. The first core network device and the second core network device are not shown in FIG. 2, FIG. 3A, and FIG. 3B. For example, the first core network device is an AMF, and the second core network device is an AF, an NEF, or the like. In the following description process, an example in which the second core network device is the AF is used. The core network device may have a connection relationship with an access network device. For example, the access network device may be connected to the AMF, and the AMF may be connected to the AF.

In embodiments of this application, "including" may be understood as "appearing", "configuring", "present (present)", or the like. For example, that one piece of signaling includes information about a UE may be understood as that the information about the UE appears in the information, may be understood as that the information about the UE is configured in the information, or may be understood as that the information about the UE is present in the information. For another example, that one piece of signaling includes one field may be understood as that the field appears in the information, may be understood as that the field is configured in the information, or may be understood as that the field is present in the information. Similarly, "not including" may be understood as "not appearing", "not configuring", "absent (absent)", or the like. For example, that one piece of signaling does not include information about a UE may be understood as that the information about the UE does not appear in the information, may be understood as that the information about the UE is not configured in the information, or may be understood as that the information about the UE is absent in the information. For another example, that one piece of signaling does not include one field may be understood as that the field does not appear in the information, may be understood as that the field is not configured in the information, or may be understood as that the field is absent in the information.

An embodiment of this application provides a paging method. FIG. 4 is a flowchart of the method.

S401: An AF sends signaling to an AMF. Correspondingly, the AMF receives the signaling from the AF.

The signaling may be used to page one or more UEs (for example, the paging is similar to paging (paging) in a cellular network), used to select one or more UEs, used to indicate (or trigger) one or more UEs to send uplink data, used to indicate (or trigger) one or more UEs to establish a connection with a network (for example, an access network device), used to indicate (or trigger) one or more UEs to initiate random access, or the like. The following uses an example in which the signaling is used to page one or more UEs. In this case, the one or more UEs may be considered as to-be-paged UEs. The signaling may include information about the to-be-paged UEs. Information about one UE is, for example, an identifier of the UE, or memory information of the UE. For example, after completing random access with an access network device, a to-be-paged UE initiates a registration procedure to the AMF. In the registration procedure, a core network may allocate an identifier to the to-be-paged UE, or the UE may send an identifier of the UE to a core network, so that the core network learns of the identifier. In this case, the signaling may include the identifier of the to-be-paged UE. For another example, the to-be-paged UE has not registered with the core network, or the to-be-paged UE is a tag disposed on a product, and memory information of the tag may indicate an attribute such as a type or a material of the product. However, this paging is to search for a product of a type. In this case, the signaling may include the memory information of the to-be-paged UE. For example, the memory information included in the signaling is a "clothing category", indicating that a tag of the clothing category is to be paged this time. For another example, the memory information included in the signaling is "XX^{th} clothing". "XX" may represent one EPC, indicating that a tag having the EPC is to be paged; or "XX" represents an EPC range, indicating that a tag having an EPC within the EPC range is to be paged.

The signaling is, for example, application layer paging (or inventorying) signaling. For example, the signaling is also referred to as fourth signaling. In FIG. 4, the signaling is represented as signaling 1 used to page one or more UEs. Optionally, the identifier of the UE is, for example, an EPC of the UE, a system architecture evolution (system architecture evolution, SAE) temporary mobile station identifier (temporary mobile station identifier, S-TMSI), or a 5G-S-TMSI.

In this embodiment of this application, the AF can determine a quantity of to-be-paged UEs. In this case, if the signaling 1 is used to page one UE, the signaling 1 may further indicate that the quantity of to-be-paged UEs is 1 (or indicate that a single UE is paged; indicate that a quantity of UEs paged by signaling 2 or signaling 3 is 1; or indicate that a quantity of UEs paged by a first core network device or a first device is 1). Alternatively, if the signaling 1 is used to page a plurality of UEs, the signaling 1 may further indicate that the quantity of to-be-paged UEs is greater than 1 (or indicate that the plurality of UEs are paged; indicate that a quantity of UEs paged by signaling 2 or signaling 3 is greater than 1; or indicate that a quantity of UEs paged by a first core network device or a first device is greater than 1). This indication is used, so that the AMF can determine whether to page a single UE or a plurality of UEs. For example, the signaling 1 may indicate, by carrying corresponding indication information, whether the quantity of to-be-paged UEs is 1 or greater than 1. Alternatively, the signaling 1 may not need to carry indication information, but indicates, by using the signaling 1, whether the quantity of to-be-paged UEs is 1 or greater than 1.

For example, if the information about the to-be-paged UEs included in the signaling 1 is identifiers of the to-be-paged UEs, the signaling 1 may indicate, by using the identifiers of the UEs included in the signaling 1, that the quantity of to-be-paged UEs is 1, or indicate that the quantity of to-be-paged UEs is greater than 1. If a quantity of UE identifiers included in the signaling 1 is 1, that is, the signaling 1 includes an identifier of one UE, the identifier of the UE is equivalent to indicating that the quantity of to-be-paged UEs is 1. Alternatively, if a quantity of UEs included in the signaling 1 is greater than 1, that is, the signaling 1 includes identifiers of a plurality of UEs, the identifiers of the plurality of UEs are equivalent to indicating that the quantity of to-be-paged UEs is greater than 1. In addition, if the signaling 1 includes the identifier of the to-be-paged UE, the signaling 1 may actually indicate the quantity of to-be-paged UEs. The quantity of UE identifiers included in the signaling 1 is the quantity of to-be-paged UEs. In this case, original content of the signaling 1 can indicate the quantity of to-be-paged UEs with no need of using additional indication information. This can reduce an information amount of the signaling 1, and the AMF can also obtain more content based on the signaling 1.

Alternatively, the signaling 1 may indicate, by using additional indication information, whether the quantity of to-be-paged UEs is 1 or greater than 1. For example, if the information about the to-be-paged UE included in the signaling 1 is memory information of the to-be-paged UE, the signaling 1 may further indicate, by using the corresponding indication information, whether the quantity of to-be-paged UEs is 1 or greater than 1. For example, the signaling 1 may include a third field. If a value of the third field is a fifth value, it indicates that the quantity of to-be-paged UEs is 1, or if a value of the third field is a sixth value, it indicates that the quantity of to-be-paged UEs is greater than 1. Optionally, in this case, if the value of the third field is the sixth value, the sixth value may indicate the quantity of to-be-paged UEs. Alternatively, if the value of the third field is the sixth value, the signaling 1 may further include a fourth field, and a value of the fourth field may indicate the quantity of to-be-paged UEs. In other words, if the quantity of to-be-paged UEs is greater than 1, the signaling 1 may further indicate a specific quantity of to-be-paged UEs.

For another example, if the signaling 1 includes a third field, it indicates that the quantity of to-be-paged UEs is 1, or if the signaling 1 does not include a third field, it indicates that the quantity of to-be-paged UEs is greater than 1. If the signaling 1 does not include the third field, the AMF may not be able to determine the quantity of UEs. Optionally, in this case, if the signaling 1 does not include the third field, the signaling 1 may further include a fourth field, and the fourth field may indicate the quantity of to-be-paged UEs. In other words, if the quantity of to-be-paged UEs is greater than 1, the signaling 1 may further indicate a specific quantity of to-be-paged UEs.

For still another example, if the signaling 1 includes a third field, it indicates that the quantity of to-be-paged UEs is greater than 1, or if the signaling 1 does not include a third field, it indicates that the quantity of to-be-paged UEs is 1. Optionally, in this case, if the signaling 1 includes the third field, a value of the third field may indicate the quantity of to-be-paged UEs. In this case, the quantity of to-be-paged UEs is greater than 1. Alternatively, if the value of the third field is a sixth value, the signaling 1 may further include a fourth field, and the fourth field may indicate the quantity of to-be-paged UEs. In other words, if the quantity of to-be-paged UEs is greater than 1, the signaling 1 may further indicate a specific quantity of to-be-paged UEs.

S402: The AMF sends signaling to the first device. Correspondingly, the first device receives the signaling from the AMF.

After receiving the signaling 1 from the AF, the AMF may perform S402. The signaling in S402 may be used to page one or more UEs (for example, the paging is similar to paging in a cellular network), used to select one or more UEs, used to indicate (or trigger) one or more UEs to send uplink data, used to indicate (or trigger) one or more UEs to establish a connection with a network (for example, an access network device), used to indicate (or trigger) one or more UEs to initiate random access, or the like. The following uses an example in which the signaling is used to page one or more UEs. In this case, the one or more UEs may be considered as to-be-paged UEs. The signaling is, for example, paging (paging) signaling sent by the AMF. For example, the signaling is also referred to as second signaling. In FIG. 4, the signaling is represented as signaling 2 used to page one or more UEs.

The signaling 2 may include information about the to-be-paged UEs. For example, the AMF obtains the information about the to-be-paged UEs from the signaling 1, and adds the information about the to-be-paged UEs to the signaling 2.

Optionally, if the information about the to-be-paged UEs is memory information of the UEs, because the memory information of the UEs is application layer information, the first device may not sense the memory information of the UEs. Therefore, the AMF may add the memory information of the to-be-paged UEs to a non-access stratum (non-access stratum, NAS) container (container) included in the signaling 2. Information included in the NAS container may also be referred to as NAS data (data). For example, the memory information of the UEs included in the NAS container may be referred to as NAS data. The signaling 2 may include one or more NAS containers. For example, the AMF may add memory information of one UE to one NAS container. In this case, a quantity of NAS containers is equal to a quantity of pieces of memory information of the UE, and the quantity of NAS containers is in one-to-one correspondence to the quantity of pieces of memory information of the UE. In this case, if the quantity of pieces of memory information of the UE is 1, the quantity of NAS containers included in the signaling 2 is also 1, or if the quantity of pieces of memory information of the UE is greater than 1, the quantity of NAS containers included in the signaling 2 is also greater than 1. Alternatively, the AMF may add memory information of all the to-be-paged UEs to one NAS container. In this case, regardless of whether a quantity of pieces of memory information of the UEs is 1 or greater than 1, the signaling 2 may include only one NAS container. After the first device receives the signaling 2, content in the NAS container is invisible to the first device.

Alternatively, if the information about the to-be-paged UEs is identifiers of the UEs, the AMF may not add the identifiers of the to-be-paged UEs to the NAS container, but directly add the identifiers of the to-be-paged UEs to the signaling 2 and send the signaling 2 to the first device. After receiving the signaling 2, the first device can identify the identifiers of the to-be-paged UEs. Alternatively, even if the information about the to-be-paged UEs is identifiers of the UEs, the AMF may also add the identifiers of the to-be-paged UEs to the NAS container. This manner is flexible.

Optionally, the signaling 2 may indicate that a quantity of to-be-paged UEs is 1 (or indicate that a quantity of UEs paged by first signaling is 1; or indicate that a quantity of UEs paged by the first device is 1), or indicate that a quantity of to-be-paged UEs is greater than 1 (or indicate that a quantity of UEs paged by first signaling is greater than 1; or indicate that a quantity of UEs paged by the first device is greater than 1). The following uses an example in which the signaling 2 indicates that the quantity of to-be-paged UEs is 1 or greater than 1. The first signaling is signaling that is sent by the first device and that is used to page a UE, and the first signaling may also be referred to as signaling 3. Meaning of the first signaling is described in detail below.

For example, in an indication manner, the signaling 2 may include a first field. If a value of the first field is a first value, it indicates that the quantity of to-be-paged UEs is 1, or if a value of the first field is a second value, it indicates that the quantity of to-be-paged UEs is greater than 1. For example, if the value of the first field is "0", it indicates that the quantity of to-be-paged UEs is 1, or if the value of the first field is " 1", it indicates that the quantity of to-be-paged UEs is greater than 1. In an optional manner, if the value of the first field is the second value, the signaling 2 may further include a fifth field, and the fifth field may indicate the quantity of to-be-paged UEs (or indicate a quantity of UEs paged by the signaling 3). In other words, if the quantity of to-be-paged UEs is greater than 1, the signaling 2 may further indicate a specific quantity of to-be-paged UEs. In another optional manner, if the value of the first field is the second value, the signaling 2 may not include a fifth field, but the second value may indicate the quantity of to-be-paged UEs. Therefore, fields included in the signaling 2 can be reduced. In this case, if the first device determines that the value of the first field is the second value, in addition to determining that the quantity of to-be-paged UEs is greater than 1, the first device may further determine a specific quantity of to-be-paged UEs, or the first device does not need to determine that the quantity of to-be-paged UEs is greater than 1 but directly determines a specific quantity of to-be-paged UEs. In this case, the second value may occupy one or more bits. For example, if the value of the first field is "0", it indicates that the quantity of to-be-paged UEs is 1, and "0" is the first value. If the value of the first field is another value other than "0", the value indicates the specific quantity of to-be-paged UEs.

For example, if the signaling 2 indicates that the quantity of to-be-paged UEs is greater than 1 (for example, the value of the first field is the second value), and the signaling 2 includes only one NAS container, the information about the to-be-paged UEs is included in the NAS container, and the first device cannot determine the quantity of to-be-paged UEs based on a quantity of NAS containers. In this case, the second value may indicate the specific quantity of to-be-paged UEs, or the fifth field included in the signaling 2 may indicate the quantity of to-be-paged UEs, so that the first device can learn of the quantity of to-be-paged UEs.

Alternatively, in still another indication manner, if the signaling 2 includes a first field, it indicates that the quantity of to-be-paged UEs is 1, or if the signaling 2 does not include a first field, it indicates that the quantity of to-be-paged UEs is greater than 1. Optionally, in this case, if the signaling 2 does not include the first field, the signaling 2 may further include a fifth field, and the fifth field may indicate the quantity of to-be-paged UEs. In other words, if the quantity of to-be-paged UEs is greater than 1, the signaling 2 may further indicate a specific quantity of to-be-paged UEs.

Alternatively, in still another indication manner, if the signaling 2 includes a first field, it indicates that the quantity of to-be-paged UEs is greater than 1, or if the signaling 2 does not include a first field, it indicates that the quantity of to-be-paged UEs is 1. Optionally, in this case, if the signaling 2 includes the first field, the signaling 2 may further include a fifth field, and the fifth field may indicate the quantity of to-be-paged UEs. In other words, if the quantity of to-be-paged UEs is greater than 1, the signaling 2 may further indicate a specific quantity of to-be-paged UEs. Alternatively, if the signaling 2 includes the first field, the signaling 2 may not include a fifth field, but a value of the first field may indicate the quantity of to-be-paged UEs. In this case, the quantity of to-be-paged UEs is greater than 1.

Alternatively, in still another indication manner, a quantity of NAS containers included in the signaling 2 is 1, and in this case, it indicates that the quantity of to-be-paged UEs is 1; or a quantity of NAS containers included in the signaling 2 is greater than 1, and in this case, it indicates that the quantity of to-be-paged UEs is greater than 1. For the first device, the quantity of to-be-paged UEs may be determined based on the quantity of NAS containers. In this indication manner, for example, the quantity of NAS containers included in the signaling 2 is equal to a quantity of pieces of information about the to-be-paged UEs included in the signaling 2. In addition, in this case, it may also be considered that the NAS containers included in the signaling 2 actually indicate a specific quantity of to-be-paged UEs. Optionally, the NAS container may be represented by using a NAS protocol data unit (protocol data unit, PDU) or NAS data.

Alternatively, in still another indication manner, if a quantity of pieces of UE information included in the signaling 2 is 1, it indicates that the quantity of to-be-paged UEs is 1, or if a quantity of pieces of UE information included in the signaling 2 is greater than 1, it indicates that the quantity of to-be-paged UEs is greater than 1. For the first device, the quantity of to-be-paged UEs may be determined based on the quantity of pieces of UE information. In this indication manner, the information about the to-be-paged UEs included in the signaling 2 is not included in the NAS container. For example, the UE information is identifiers of the UEs. In addition, in this case, it may also be considered that the information about the to-be-paged UEs actually indicates a specific quantity of to-be-paged UEs.

In addition to the foregoing several manners, the signaling 2 may further indicate, in another manner, whether the quantity of to-be-paged UEs is 1 or greater than 1. This is not specifically limited.

If the first device is not an access network device, for example, the first device is a terminal device used as a reader, in S402, the AMF may send the signaling 2 to the access network device, and then the access network device sends the signaling 2 to the first device. Alternatively, if the first device is an access network device, in S402, the AMF may directly send the signaling 2 to the first device.

S403: The first device sends first signaling. Correspondingly, one or more UEs receive the first signaling. In this embodiment of this application, an example in which a first UE receives the first signaling is used.

After receiving the signaling 2 from the AMF, the first device may perform S403. The first signaling in S403 may be used to page one or more UEs (for example, the paging is similar to paging in a cellular network), used to select one or more UEs, used to indicate (or trigger) one or more UEs to send uplink data, used to indicate (or trigger) one or more UEs to establish a connection with a network (for example, an access network device), used to indicate (or trigger) one or more UEs to initiate random access, or the like. The following uses an example in which the signaling is used to page one or more UEs. In this case, the one or more UEs may be considered as to-be-paged UEs. The signaling is, for example, paging (paging) signaling sent by the first device. For example, the signaling is also referred to as first signaling. In FIG. 4, the signaling is represented as signaling 3 used to page one or more UEs.

The signaling 3 may include information about the to-be-paged UEs. For example, the first device obtains the information about the to-be-paged UEs from the signaling 2, and adds the information about the to-be-paged UEs to the signaling 3. If the information about the to-be-paged UEs in the signaling 2 is included in the NAS container, the first device adds the NAS container to the signaling 3, or if the information about the to-be-paged UEs in the signaling 2 is not included in the NAS container, the first device directly adds the information about the to-be-paged UEs to the signaling 3.

Optionally, the signaling 3 may indicate that a quantity of to-be-paged UEs is 1 (or indicate a quantity of UEs paged by the signaling 3 is 1), or the signaling 3 may indicate that a quantity of to-be-paged UEs is greater than 1 (or indicate a quantity of UEs paged by the signaling 3 is greater than 1). The following uses an example in which the signaling 3 indicates that the quantity of to-be-paged UEs is 1 or greater than 1 for description.

For example, in an indication manner, the signaling 3 may include a second field. If a value of the second field is a third value, it indicates that the quantity of to-be-paged UEs is 1, or if a value of the second field is a fourth value, it indicates that the quantity of to-be-paged UEs is greater than 1. In an optional manner, if the value of the second field is the fourth value, the signaling 2 may further include a sixth field, and the sixth field may indicate the quantity of to-be-paged UEs (or indicate the quantity of UEs paged by the signaling 3). In other words, if the quantity of to-be-paged UEs is greater than 1, the signaling 2 may further indicate a specific quantity of to-be-paged UEs. In another optional manner, if the value of the second field is the fourth value, the signaling 3 may not include a sixth field, but the fourth value may indicate the quantity of to-be-paged UEs. Therefore, fields included in the signaling 3 can be reduced. In this case, if the UE determines that the value of the first field is the second value, in addition to determining that the quantity of to-be-paged UEs is greater than 1, the UE may further determine a specific quantity of to-be-paged UEs, or the UE does not need to determine that the quantity of to-be-paged UEs is greater than 1 but directly determines a specific quantity of to-be-paged UEs. In this case, the second value may occupy one or more bits.

Alternatively, in another indication manner, if the signaling 3 includes a second field, it indicates that the quantity of to-be-paged UEs is 1, or if the signaling 3 does not include a second field, it indicates that the quantity of to-be-paged UEs is greater than 1. Optionally, in this case, if the signaling 3 does not include the second field, the signaling 3 may further include a sixth field, and the sixth field may indicate the quantity of to-be-paged UEs. In other words, if the quantity of to-be-paged UEs is greater than 1, the signaling 3 may further indicate a specific quantity of to-be-paged UEs.

Alternatively, in still another indication manner, if the signaling 3 includes a second field, it indicates that the quantity of to-be-paged UEs is greater than 1, or if the signaling 3 does not include a second field, it indicates that the quantity of to-be-paged UEs is 1. Optionally, in this case, if the signaling 3 includes the second field, a value of the second field may indicate the quantity of to-be-paged UEs. In this case, the quantity of to-be-paged UEs is greater than 1. Alternatively, if the signaling 3 includes the second field, the signaling 3 may further include a sixth field, and the sixth field may indicate the quantity of to-be-paged UEs. In other words, if the quantity of to-be-paged UEs is greater than 1, the signaling 3 may further indicate a specific quantity of to-be-paged UEs.

Alternatively, in still another indication manner, if a quantity of NAS containers included in the signaling 3 is 1, it indicates that the quantity of to-be-paged UEs is 1, or if a quantity of NAS containers included in the signaling 3 is greater than 1, it indicates that the quantity of to-be-paged UEs is greater than 1. For the first device, the quantity of to-be-paged UEs may be determined based on the quantity of NAS containers. In this indication manner, for example, the quantity of NAS containers included in the signaling 3 is equal to a quantity of pieces of information about the to-be-paged UEs included in the signaling 2. In addition, in this case, it may also be considered that the NAS containers included in the signaling 3 actually indicate a specific quantity of to-be-paged UEs. Optionally, the NAS container may be represented by using a NAS PDU or NAS data.

Alternatively, in still another indication manner, if a quantity of pieces of UE information included in the signaling 3 is 1, it indicates that the quantity of to-be-paged UEs is 1, or if a quantity of pieces of UE information included in the signaling 3 is greater than 1, it indicates that the quantity of to-be-paged UEs is greater than 1. In this indication manner, the information about the to-be-paged UEs included in the signaling 3 is not included in the NAS container. For example, the UE information is identifiers of the UEs. In addition, in this case, it may also be considered that the information about the to-be-paged UEs actually indicates a specific quantity of to-be-paged UEs.

Alternatively, in yet another indication manner, a first resource is used for indication. The first resource is used by the to-be-paged UEs to send uplink data, and signaling 3 may be used to determine the first resource. The first resource may include a time domain resource and/or a frequency domain resource. For example, the frequency domain resource included in the first resource is the same as a frequency domain resource of the signaling 3, or the frequency domain resource included in the first resource may be different from a frequency domain resource of the signaling 3. For example, the first device may further send a synchronization signal, and the frequency domain resource included in the first resource is, for example, a frequency domain resource of the synchronization signal. For example, the first device may determine the quantity of to-be-paged UEs based on the signaling 2, and the first device may schedule a resource for the to-be-paged UEs based on the quantity of to-be-paged UEs. The resource scheduled by the first device may be referred to as the first resource. For example, if the signaling 2 indicates that the quantity of to-be-paged UEs is 1, the first device may schedule one resource used for uplink data transmission, and the first resource includes one resource. When the UE determines that there is only one resource, an optimized procedure may be directly used, that is, steps used for access (for example, S103 and S104 shown in FIG. 1) are omitted, and uplink data is directly sent to the access network device. Alternatively, if the signaling 2 indicates that the quantity of to-be-paged UEs is greater than 1, the first device may schedule a plurality of resources used for uplink data transmission, and the first resource includes the plurality of resources. If the UE can determine which resource included in the first resource is used by the UE, an optimized access method may still be used, and the steps used for access is omitted. Alternatively, if the UE cannot determine which resource included in the first resource is used by the UE, a contention-based access method may be used, the uplink data is sent after the access succeeds. Optionally, "one resource" or "a plurality of resources" in the first resource in this embodiment of this application is a time domain resource included in the first resource.

For some or all indication manners of the signaling 3 described above, refer to descriptions of corresponding indication manners of the signaling 2 in S402.

Optionally, the signaling 3 may indicate the specific quantity of to-be-paged UEs. A quantity of resources scheduled by the first device may be equal to the quantity of to-be-paged UEs, or may be greater than the quantity of to-be-paged UEs (for example, a time unit included in the resource scheduled by the first device is a maximum time unit range, the maximum time unit range is equivalent to a maximum range of time units included in the first resource, and the to-be-paged UEs may select a resource within the maximum time unit range). For example, a time domain resource included in one resource included in the first resource is one or more time units. In this embodiment of this application, the time unit is, for example, a radio frame (radio frame), a subframe (subframe), a slot (slot), a mini-slot (mini-slot), or orthogonal frequency division multiplexing (orthogonal frequency division multiplexing, OFDM). Alternatively, the time unit in this embodiment of this application may not be a time interval having a fixed time length, but a sending opportunity (or referred to as an access opportunity) in time domain. Duration of different sending opportunities may be the same or different.

Optionally, the signaling 3 may include information about the first resource. This is equivalent to that in addition to being used to page one or more UEs, the signaling 3 may further be used to configure, for the one or more UEs, a resource used to send uplink data. Alternatively, the signaling 3 does not include information about the first resource, and the first device may send the information about the first resource by using other signaling. Regardless of whether the first device sends the information about the first resource by using the signaling 3 or by using other signaling, or regardless of whether the first device sends the information about the first resource by using the signaling 3 or by using other signaling, if the information about the first resource indicates one resource used for uplink data transmission, that is, the first resource includes one resource used for uplink data transmission, it is equivalent to indicating that the quantity of to-be-paged UEs is 1. However, if the first resource includes a plurality of resources used for uplink data transmission, it is equivalent to indicating that the quantity of to-be-paged UEs is greater than 1. For example, a quantity of resources included in the first resource is equal to the quantity of to-be-paged UEs, and in this case, the quantity of resources included in the first resource is also equivalent to indicating a specific quantity of to-be-paged UEs. If the first device sends the information about the first resource by using other signaling, it may be considered that the quantity of to-be-paged UEs is indicated by using the other signaling. In other words, signaling including the information about the first resource and signaling used to page a UE may be a same piece of signaling, for example, the signaling 3, or signaling including the information about the first resource and signaling used to page a UE may be two different pieces of signaling. If the signaling including the information about the first resource and the signaling used to page the UE are two different pieces of signaling, the first device may continuously send the two pieces of signaling.

The information about the first resource included in the signaling 3 or the other signaling includes, for example, time domain information and frequency domain information of the first resource; or the information about the first resource included in the signaling 3 or the other signaling may include time domain information of the first resource, but does not include frequency domain information of the first resource. For example, the frequency domain information of the first resource may be determined according to a second rule. For example, the second rule is that the frequency domain information of the first resource is frequency domain information of signaling 3, or the frequency domain information of the first resource is frequency domain information of the synchronization signal. In this way, the information about the first resource may not include the frequency domain information of the first resource. This can reduce an amount of information carried by signaling and reduce transmission overheads.

In addition to the foregoing several manners, the signaling 3 may further indicate, in another manner, whether the quantity of to-be-paged UEs is 1 or greater than 1. This is not specifically limited.

Optionally, the first device may directly send the signaling 3 to the UE. For example, according to an architecture shown in FIG. 2, FIG. 3A, or FIG. 3B, the solution can be implemented. Alternatively, the first device may send the signaling 3 to the access network device, and the access network device sends the signaling 3, for example, in a broadcast, multicast, or unicast manner, so that the UE can receive the signaling 3. For example, according to the architecture shown in FIG. 3B, the solution can be implemented.

S404: The first UE sends uplink data in a first time unit. Correspondingly, the first device receives the uplink data from the first UE in the first time unit.

In this embodiment of this application, for the first device, the first resource is used by the to-be-paged UEs to send uplink data. If one of the to-be-paged UEs sends uplink data, a resource used by the UE to send the uplink data needs to be determined (or a resource used by the UE in the first resource needs to be determined). For example, the to-be-paged UEs (or the UEs paged by the signaling 1, the UEs paged by the signaling 2, or the UEs paged by the signaling 3) include first UE. If the quantity of to-be-paged UEs is 1, the first UE is the UE, or if the quantity of to-be-paged UEs is greater than 1, the first UE is one of a plurality of UEs.

For the first UE, a time domain resource included in a resource used by the first UE to send the uplink data is the first time unit. If the quantity of to-be-paged UEs is 1, that one UE determines a resource used by the UE to send uplink data may include determining the first resource. The first resource is the resource used by the UE to send the uplink data, or all resources in the first resource are resources used by the UE in the first resource. Alternatively, if the quantity of to-be-paged UEs is greater than 1, one UE sends uplink data by using some resources in the first resource. In this case, that the UE determines a resource used by the UE to send the uplink data may include determining the first resource and determining the resource used by the UE in the first resource. In other words, the UE may perform a two-step determining process. Alternatively, that the UE determines a resource used by the UE to send uplink data may include determining the resource used by the UE in the first resource. In other words, the UE may perform a one-step determining process.

For one UE, the first resource may be determined based on the information about the first resource. If the information about the first resource is included in the signaling 3, the UE may determine the first resource based on the signaling 3. If the information about the first resource is included in other signaling, the UE may determine the first resource based on the other signaling.

When determining a resource used by one UE in the first resource, the UE may consider the signaling 3, or may not consider the signaling 3. The following uses an example for description. In addition, in FIG. 4, an example in which the signaling 3 is considered is used.
1. The UE considers the signaling 3 when determining the resource used by the UE in the first resource, or the UE determines, based on the signaling 3, the resource used by the UE in the first resource. This case may also be understood as follows: For the first device, the signaling 3 may be used by a to-be-paged UE to determine the first resource based on the signaling 3, and for the to-be-paged UE, the resource used by the UE in the first resource may be determined based on the signaling 3. In this case, the information about the first resource may be included in signaling 3, or may be included in other signaling.

For example, one UE determines that the UE is paged, and the first resource includes one resource. In this case, the resource (or the first resource) is the resource used by the first UE to send the uplink data, and the UE may send the uplink data by using the resource. For example, a time domain resource included in the resource is the first time unit. The signaling 3 includes information about the to-be-paged UEs. After receiving the signaling 3, if one UE determines that information about the UE is included in the signaling 3, it is determined that the UE is paged.

For another example, if the first resource includes a plurality of resources, the UE may determine, based on the signaling 3 and according to a first rule, the resource used by the UE in the first resource. The first rule may be configured by the first device, predefined by using a protocol, or preconfigured in the UE. For example, one type of first rule is that one UE may determine, based on an arrangement order of the UE information included in the signaling 3, a resource used by the UE in the first resource. For example, if the quantity of to-be-paged UEs is greater than 1, the signaling 3 may include a plurality pieces of information about to-be-paged UEs. In the signaling 3, the plurality pieces of information about the UEs are sorted in a first order. In this case, for one UE, a ranking (or a sequence number or a location) of information about the UE in the first order may be determined, and a resource used by the UE in the first resource may be determined based on the ranking. If the signaling 3 includes a plurality of NAS containers, the UE information is sorted in the first order. An implementation may be that the NAS containers are sorted in the first order. Alternatively, if the signaling 3 does not include the NAS container, for example, the UE information included in the signaling 3 is not included in the NAS container, the UE information may be sorted in the first order in the signaling 3. Alternatively, if the signaling 3 includes one NAS container, and the NAS container includes a plurality pieces of information about the UEs, the plurality pieces of information about the UEs are sorted in the first order. An implementation may be that the plurality pieces of information about the UEs are sorted in the first order in the NAS container. Alternatively, if the signaling 3 includes a plurality pieces of information about UEs, the plurality pieces of information about the UEs are a plurality of identifiers of the UEs, and the plurality of identifiers of the UEs are not included in the NAS container, the plurality pieces of information about the UEs are sorted in the first order. An implementation may be that the plurality of identifiers of the UEs are sorted in the first order in the signaling 3.

For example, the signaling 3 includes information about three UEs, and the first order is information about a second UE - information about a third UE - information about a first UE. The first resource also includes three resources, and in a time domain order, the three resources are respectively a resource 1, a resource 2, and a resource 3. In this case, the first UE may determine to use the resource 3 to send uplink data. For example, a time domain resource included in the resource 3 is the first time unit. The second UE may determine to use the resource 1 to send uplink data. The third UE may determine to use the resource 2 to send uplink data. The resource 1, the resource 2, and the resource 3 may be continuous in time domain, or any adjacent resource among the resource 1, the resource 2, and the resource 3 may be discontinuous. For example, the resource 1 and the resource 2 are discontinuous, and/or the resource 2 and the resource 3 are discontinuous.

For another example, if the first resource includes a plurality of resources, the UE may determine, based on signaling 3 and signaling used to trigger a next time unit (or used to trigger a next resource, or used to trigger a next UE) and according to the first rule, the resource used by the UE in the first resource. If a capability of a to-be-paged UE is low, for example, a passive tag, a UE of this type may not be able to maintain a state of a crystal oscillator in the UE for a long time. For example, the signaling 3 is used to page a plurality of UEs, and each UE can determine, based on a ranking of information about the UE in the signaling 3 and an order of a plurality of resources included in the first resource in time domain, a resource that is in the first resource and that should be used by the UE. However, the UE may not be able to determine when the resource in the first resource arrives. For example, for the first UE, use of the first time unit in the first resource can be determined, but the first UE cannot determine when the first time unit arrives. Therefore, optionally, if the quantity of to-be-paged UEs is greater than 1, after completing communication with one UE, the first device may further send third signaling. The third signaling may be used to trigger a next to-be-paged UE to send uplink data, used to trigger a next time unit, or used to trigger a next resource in the first resource. Optionally, the third signaling may be a signaling set. In other words, the third signaling may include at least one piece of signaling. One or more UEs may be able to receive the third signaling. For example, for the first UE, a sequence number of signaling, namely, the third signaling, that is received by the first UE and that is used to trigger a next UE to send uplink data may be determined. For example, the third signaling is an N^{th} piece of signaling that is received by the first UE and that is used to trigger a next UE to send uplink data, where N is a positive integer. In this case, if N represents a ranking of the information about the first UE in the first signaling, in other words, the information about the first UE is ranked N^{th} in the first signaling, it indicates that the first time unit has arrived, and the first UE may send the uplink data to the first device in the first time unit. However, if N does not represent the ranking of the information about the first UE in the first signaling, in other words, the information about the first UE is not ranked N^{th} in the first signaling, the first UE temporarily does not send the uplink data, but continues to wait for next third signaling. In an example, a maximum time unit range indicated by the access network device is 5, and one UE determines, according to the first rule (for example, the first order), that the UE is a 3^{rd} to-be-paged UE. After the UE receives the three pieces of third signaling, the UE may send uplink data.

If a to-be-paged UE has a high capability, the first device may not need to send the third signaling, and each UE can determine when to send uplink data.

2. When determining the resource used by the UE in the first resource, the UE may consider the signaling 3, or may not consider the signaling 3. If the information about the first resource is included in the signaling 3, the UE considers the signaling 3 when determining the resource used by the UE in the first resource, or if the information about the first resource is included in other signaling, the UE does not consider the signaling 3 when determining the resource used by the UE in the first resource. This case may also be understood as follows: For the first device, if the information about the first resource is included in the signaling 3, the signaling 3 may be used by the to-be-paged UE to determine the first resource based on the signaling 3, and for the to-be-paged UE, the first resource may be determined based on the signaling 3. Alternatively, for the first device, if the information about the first resource is not included in the signaling 3, the signaling 3 is not used by the to-be-paged UE to determine the first resource based on the signaling 3, and for the to-be-paged UE, the first resource is not determined based on the signaling 3.

For example, if the first resource includes a plurality of resources, a UE may determine, based on an identifier of the UE, a resource used by the UE in the first resource. For example, if the first resource includes L resources, one UE may determine, by using an identifier of the UE and the L resources, a resource used by the UE. For example, in a determining manner, the UE performs modulo processing on L by using the identifier of the UE, and an obtained result is a sequence number of the resource used by the UE in the L resources. If one UE determines a resource used by the UE in the L resources, the UE may directly use an optimized access manner, in other words, an access step is omitted, and the UE sends uplink data to the access network device. However, if the UE fails to access the network, for example, the uplink data fails to be sent, the UE may fall back to a contention-based access manner.

For another example, if the first resource includes a plurality of resources, the UE may determine, based on a random number, the resource used by the UE in the first resource. For example, the first resource configured by the first device includes a maximum time unit range that can be used by the UE, and a quantity of time units included in the maximum time unit range may be greater than or equal to the quantity of to-be-paged UEs. The information about the first resource included in the signaling 3 or other signaling may indicate, for example, the maximum time unit range, or the information about the first resource may include a first parameter, and the UE may determine the maximum time unit range based on the first parameter. For example, the first parameter is a parameter Q, and one UE may select a random number P within (0, 2^{Q-1}), and the random number P may be used as a sequence number of a time unit used by the UE in the first resource. For example, the UE may select, from (0, 2^{Q-1}), a value closest to a Q value as the random number P, the UE may randomly select, from (0, 2^{Q-1}), one value as the random number P, or the UE may determine, from (0, 2^{Q-1}), one value as the random number P in an even selection manner. The first device may send the third signaling. For one UE, each time the third signaling is received, P may be decreased by 1 (or an initial value may alternatively be 0, and an operation of adding 1 is performed each time the third signaling is received). When P is decreased to 0 (or a value reaches P), the UE determines that a time unit that can be used by the UE arrives, and the UE may send uplink data in the time unit.

Each time unit in the maximum time unit range may be understood as one resource. Each piece of signaling used to trigger a next UE to send uplink data may trigger one resource, and the resource may be used by one UE to send uplink data. Optionally, signaling (for example, the signaling 3 or the other signaling) including the first parameter may also be understood as signaling used to trigger the next UE to send the uplink data. For example, if a random number P generated by one UE is 0, after receiving the signaling including the first parameter, the UE may determine that a time unit that can be used by the UE has arrived. Time lengths of different time units herein may be the same or may be different.

It can be learned that in this embodiment of this application, regardless of whether one UE or a plurality of UEs are paged, neither the UE nor the first device needs to perform a process similar to random access. For example, S405 and S406 in FIG. 4 represent the process similar to the random access. S405 and S 103 shown in FIG. 1 may be a same step, and S406 and S 104 shown in FIG. 1 may be a same step. In other words, S405 is that the paged UE sends a random number to the first device, and S406 is that the first device replies with an acknowledgment message for the random number (it should be noted that the random number in S405 and S406 may be different from the random number in S403). However, in this embodiment of this application, neither S405 nor S406 needs to be performed, and the paged UE may directly send the uplink data to the first device. In this way, steps needed for data transmission between the UE and the first device are reduced. This can reduce signaling overheads and reduce a data transmission delay.

For example, the paged UE is a tag. Optionally, uplink data sent by one UE may include an identifier of the tag, for example, an EPC of the tag. For example, this paging is for searching for a "clothing category" product. In this case, if memory information of a tag indicates that the tag is a "clothing category" product, it may be determined that the tag is to be paged. The uplink data sent by the tag may include the EPC of the tag, and the first device (or the core network device, for example, the AF) can determine which products are clothing category products. This helps the first device (or the core network device, for example, the AF) to perform processing such as classification on the products.

Optionally, the solution in this embodiment of this application may be performed under an indication of the first device. For example, the first device sends first indication information, and the first indication information may indicate to perform the technical solution in this embodiment of this application, indicate not to perform a random access process, or indicate to use the optimized access manner (in other words, not to perform a random access process). For the UE, if the UE receives the first indication information, the UE may perform the technical solution in this embodiment of this application. If the UE does not receive the first indication information, the UE may use a conventional contention access manner. The first device may determine, based on a case, whether to perform the technical solution in this embodiment of this application. For example, in a scenario in which a delay requirement is high, or in a scenario in which the first device is eager to learn of uplink data of a to-be-paged UE, the first device may send the first indication information, to reduce a data transmission delay. The first device may directly send the first indication information to the UE. For example, according to the architecture shown in FIG. 2, FIG. 3A, or FIG. 3B, the solution can be implemented. Alternatively, the first device may send the first indication information to the access network device, and the access network device sends the first indication information to the UE. For example, according to the architecture shown in FIG. 3B, the solution can be implemented.

Optionally, the uplink data of the UE may be sent to the first device. For example, according to the architecture shown in FIG. 2, FIG. 3A, or FIG. 3B, the solution can be implemented. Alternatively, the uplink data of the UE may be sent to the access network device, and then the access network device sends the uplink data to the first device. For example, according to the architecture shown in FIG. 3B, the solution can be implemented.

It should be noted that, if the to-be-paged UE is a passive UE, for example, a passive tag, a UE of this type may not be able to actively send a signal, but needs to obtain energy by using a received signal, and then send the signal by using the obtained energy. Optionally, the method further includes S407: The first device sends a first signal, where the first signal may be used to provide energy for the to-be-paged UE to perform data transmission. The "transmission" described in this embodiment of this application may include sending and/or receiving. Correspondingly, one or more UEs may receive the first signal. In FIG. 4, an example in which the first UE receives the first signal is used. A waveform of the signal sent by the first device is, for example, a continuous waveform. After receiving the first signal, the first UE may obtain an induced current, to obtain electric energy, so that the first UE may send the uplink data to the first device by using the obtained electric energy. For example, S407 occurs before S403, occurs after S403, or occurs simultaneously with S403. In FIG. 4, an example in which S407 occurs after S403 is used. Alternatively, if the to-be-paged UE is a semi-active UE or an active UE, the first UE may not need to obtain energy by using an external signal, and S407 may not be performed; or the to-be-paged UE may obtain energy by using the signaling 3, and the first device does not need to additionally send a signal, and S407 may not be performed. Therefore, S407 is an optional step.

After the first device receives uplink data from one UE, if there is no downlink data to be sent to the UE, the first device completes communication with the UE. Alternatively, after the first device receives uplink data from one UE, if there is downlink data to be sent to the UE, the first device may continue to send the downlink data to the UE; and after completing sending the downlink data to the UE, the first device completes communication with the UE.

Optionally, after receiving uplink data from one UE, the first device may send response information. The response information may indicate that the uplink data of the UE is successfully received. Optionally, the response information includes first information, and the first information is, for example, a random number or an identifier of the UE. Optionally, when sending uplink data, one UE may send the first information. In this case, when sending response information corresponding to the uplink data, the first device may include the first information, so that the UE can determine, based on the first information, that the response information indicates that the uplink data of the UE is successfully sent. For example, the first device receives the uplink data from the first UE, and the first device may send a response message. The response information may include an identifier of the first UE, a random number, or the like. The response information may be received by the plurality of UEs. After receiving the response information, the first UE can determine, based on the identifier of the first UE or the random number, that the uplink data of the first UE is successfully sent.

In this embodiment of this application, the first device can clearly determine whether to page one UE or a plurality of UEs. Therefore, first signaling sent by the first device may be used to determine the first resource. The UE only needs to send the uplink data to the first device by using the first resource, and does not need to perform access in a contention manner. Therefore, the UE does not need to perform the process similar to the random access. For example, after receiving the first signaling used to page the UE, the UE may send the uplink data to the first device by using the first resource, and does not need to perform a step of establishing a connection with the first device. In this way, the steps needing to be performed for data transmission between the UE and the first device. This helps reduce the signaling overheads and reduce the data transmission delay.

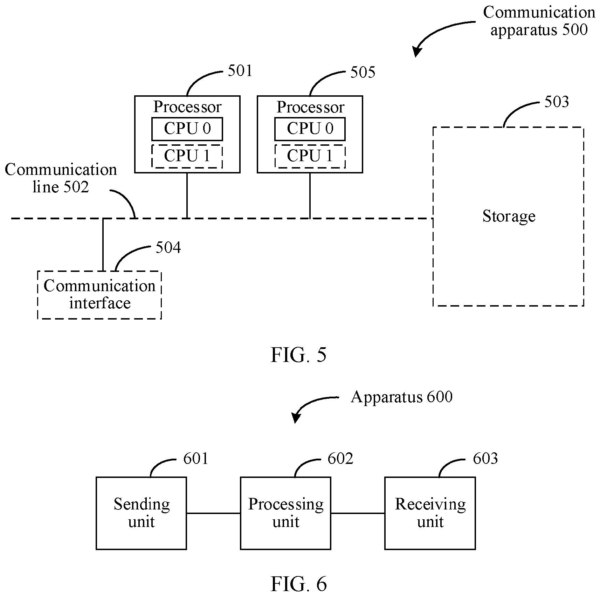

FIG. 5 is a diagram of a structure of a communication apparatus according to an embodiment of this application. The communication apparatus 500 may be the first device or a circuit system of the first device in the embodiment shown in FIG. 4, and is configured to implement the method corresponding to the first device in the foregoing method embodiments. Alternatively, the communication apparatus 500 may be the first terminal device or a circuit system of the first terminal device in the embodiment shown in FIG. 4, and is configured to implement the method corresponding to the first terminal device in the foregoing method embodiments. Alternatively, the communication apparatus 500 may be the first core network device or a circuit system of the first core network device in the embodiment shown in FIG. 4, and is configured to implement the method corresponding to the first core network device in the foregoing method embodiments. Alternatively, the communication apparatus 500 may be the second core network device or a circuit system of the second core network device in the embodiment shown in FIG. 4, and is configured to implement the method corresponding to the second core network device in the foregoing method embodiments. For a specific function, refer to descriptions in the foregoing method embodiments. For example, the circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, may be in different physical locations, or may be on different integrated circuits. Optionally, different processors may be integrated into one or more processors, for example, integrated into one or more integrated circuits.

Optionally, the communication apparatus 500 includes one or more storages 503, configured to store instructions. Optionally, the storage 503 may further store data. The processor and the storage may be separately disposed, or may be integrated together.

Optionally, the communication apparatus 500 includes a communication line 502 and at least one communication interface 504. Because the storage 503, the communication line 502, and the communication interface 504 are all optional, the storage 503, the communication line 502, and the communication interface 504 are all represented by dashed lines in FIG. 5.

Optionally, the communication apparatus 500 may further include a transceiver and/or an antenna. The transceiver may be configured to send information to or receive information from another apparatus. The transceiver may be referred to as a transceiver machine, a transceiver circuit, an input/output interface, or the like, and is configured to implement a transceiver function of the communication apparatus 500 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 501 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 502 may include a path for information transmission between the foregoing components.

The communication interface 504 uses any apparatus like a transceiver, and is configured to communicate with another device or a communication network, such as an Ethernet, a radio access network (radio access network, RAN), a wireless local area network (wireless local area network, WLAN), or a wired access network.

The storage 503 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The storage 503 may exist independently, and may be connected to the processor 501 through the communication line 502. The storage 503 may alternatively be integrated with the processor 501.

The storage 503 is configured to store computer-executable instructions for executing the solutions of this application, and the execution is controlled by the processor 501. The processor 501 is configured to execute the computer-executable instructions stored in the storage 503 to perform the paging method provided in the foregoing embodiments of this application.

Optionally, the computer-executable instructions in this embodiment of this application may also be referred to as application program code. This is not specifically limited in this embodiment of this application.

During specific implementation, as an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 505 shown in FIG. 5. Each of these processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, a chip of the first device, a chip of the first terminal device, a chip of the first core network device, or a chip of the second core network device, the chip includes the processor 501 (which may further include the processor 505), the communication line 502, the storage 503, and the communication interface 504. Specifically, the communication interface 504 may be an input interface, a pin, a circuit, or the like. The storage 503 may be a register, a cache, or the like. The processor 501 and the processor 505 may be one general-purpose CPU, a microprocessor, an ASIC, or one or more integrated circuits configured to control program execution of the paging method in the foregoing embodiments.

In this embodiment of this application, the apparatus may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that division into the modules in this embodiment of this application is an example, is merely division into logical functions, and may be other division during actual implementation. For example, when each functional module is obtained through division based on each corresponding function, FIG. 6 is a diagram of an apparatus. The apparatus 600 may be the first device, the first terminal device, the first core network device, or the second core network device in the foregoing method embodiments, or a chip in the first device, a chip in the first terminal device, a chip in the first core network device, or a chip in the second core network device. The apparatus 600 includes a sending unit 601, a processing unit 602, and a receiving unit 603.

It should be understood that the apparatus 600 may be configured to implement a step performed by the first device, the first terminal device, the first core network device, or the second core network device in the method in embodiments of this application. For related features, refer to the foregoing embodiments. Details are not described herein again.

Optionally, functions/implementation processes of a sending unit 601, a receiving unit 603, and a processing unit 602 in FIG. 6 may be implemented by the processor 501 and/or the processor 505 in FIG. 5 by invoking the computer-executable instructions stored in the storage 503. Alternatively, a function/an implementation process of a processing unit 602 in FIG. 6 may be implemented by the processor 501 and/or the processor 505 in FIG. 5 by invoking the computer-executable instructions stored in the storage 503, functions/implementation processes of a sending unit 601 and a receiving unit 603 in FIG. 6 may be implemented by using the communication interface 504 in FIG. 5.

Optionally, when the apparatus 600 is a chip or a circuit, the functions/implementation processes of the sending unit 601 and the receiving unit 603 may be alternatively implemented by using a pin, a circuit, or the like.

This application further provides a computer-readable storage medium. The computer-readable storage medium stores a computer program or instructions. When the computer program or the instructions are run, the method performed by the first device, the first terminal device, the first core network device, or the second core network device in the foregoing method embodiments is implemented. In this way, the functions in the foregoing embodiments may be implemented in a form of a software function unit and sold or used as an independent product. Based on such an understanding, the technical solutions of this application essentially, or a part making contributions, or some of the technical solutions may be implemented in a form of a software product. The computer software product is stored in one storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first device, the first terminal device, the first core network device, or the second core network device in any one of the foregoing method embodiments.

An embodiment of this application further provides a processing apparatus, including a processor and an interface. The processor is configured to perform the method performed by the first device, the first terminal device, the first core network device, or the second core network device in any one of the foregoing method embodiments.

All or some of the foregoing embodiments may be implemented by using software, hardware, firmware, or any combination thereof. When the software is used to implement the foregoing embodiments, all or some of the foregoing embodiments may be implemented in a form of the computer program product. The computer program product includes one or more computer instructions. When the computer program instructions are loaded and executed on the computer, procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, such as a server a data center, or the like integrating one or more usable media that are included. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware part, or a design of any combination of the foregoing. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors combined with a digital signal processor core, or any other similar configuration.

Steps of the methods or algorithms described in embodiments of this application may be directly embedded into hardware, a software unit executed by the processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other format in this field. For example, the storage medium may connect to the processor, so that the processor may read information from the storage medium and write information to the storage medium. Alternatively, the storage medium may be integrated into the processor. The processor and the storage media may be disposed in an ASIC, and the ASIC may be disposed in a terminal device. Optionally, the processor and the storage medium may alternatively be disposed in different parts in a terminal device.

These computer program instructions may alternatively be loaded onto the computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. It is clear that a person skilled in the art may make various modifications and variations to embodiments of this application without departing from the scope of embodiments of this application. In this way, embodiments of this application are also intended to cover these modifications and variations provided that modifications and variations of embodiments of this application fall within the scope of the claims of embodiments of this application and equivalent technologies thereof.

## Claims

1. A paging method, wherein the method is applied to a first device and the method comprises:
sending a first signal, wherein the first signal is used to provide energy for a first terminal device to send uplink data;
sending first signaling, wherein the first signaling is used to page the first terminal device, the first signaling comprises information about the first terminal device, and the first signaling is used to determine a first resource; and
receiving, on the first resource, the uplink data from the first terminal device.

2. The method according to claim 1, wherein the first terminal device works in a backscatter communication scenario.

3. The method according to claim 1 or 2, wherein the method further comprises:
receiving second signaling from a first core network device, wherein the second signaling is used to page the first terminal device, and the second signaling further indicates that a quantity of terminal devices paged by the first signaling is 1, or indicates that a quantity of terminal devices paged by the first signaling is greater than 1.

4. The method according to claim 3, wherein
the second signaling comprises a first field, wherein when a value of the first field is a first value, it indicates that the quantity of terminal devices paged by the first signaling is 1, or when a value of the first field is a second value, it indicates that the quantity of terminal devices paged by the first signaling is greater than 1;
when the second signaling comprises a first field, it indicates that the quantity of terminal devices paged by the first signaling is 1, or when the second signaling does not comprise a first field, it indicates that the quantity of terminal devices paged by the first signaling is greater than 1;
the second signaling comprises a non-access stratum NAS container, and the NAS container is used to carry the information about the first terminal device, wherein when a quantity of NAS containers is 1, it indicates that the quantity of terminal devices paged by the first signaling is 1, or when a quantity of NAS containers is greater than 1, it indicates that the quantity of terminal devices paged by the first signaling is greater than 1; or
the information about the first terminal device is an identifier of the first terminal device, wherein when a quantity of terminal device identifiers comprised in the second signaling is 1, it indicates that the quantity of terminal devices paged by the first signaling is 1, or when a quantity of terminal device identifiers comprised in the second signaling is greater than 1, it indicates that the quantity of terminal devices paged by the first signaling is greater than 1.

5. The method according to claim 4, wherein
when the value of the first field is the second value, and the second signaling comprises one NAS container, the second value indicates the quantity of terminal devices paged by the first signaling.

6. The method according to any one of claims 1 to 5, wherein
the first signaling comprises a second field, wherein when a value of the second field is a third value, the quantity of terminal devices paged by the first signaling is 1, when a value of the second field is a fourth value, it indicates that the quantity of terminal devices paged by the first signaling is greater than 1;
when the first signaling comprises a second field, it indicates that the quantity of terminal devices paged by the first signaling is 1, or when the first signaling does not comprise a second field, it indicates that the quantity of terminal devices paged by the first signaling is greater than 1;
when the first resource comprises one resource used for uplink data transmission, it indicates that the quantity of terminal devices paged by the first signaling is 1, or when the first resource comprises a plurality of resources used for uplink data transmission, it indicates that the quantity of terminal devices paged by the first signaling is greater than 1;
the first signaling comprises a NAS container, and the NAS container is used to carry the information about the first terminal device, wherein when a quantity of NAS containers is 1, it indicates that the quantity of terminal devices paged by the first signaling is 1, or when a quantity of NAS containers is greater than 1, it indicates that the quantity of terminal devices paged by the first signaling is greater than 1; or
the information about the first terminal device is an identifier of the first terminal device, wherein when a quantity of terminal device identifiers comprised in the first signaling is 1, it indicates that the quantity of terminal devices paged by the first signaling is 1, or when a quantity of terminal device identifiers comprised in the first signaling is greater than 1, it indicates that the quantity of terminal devices paged by the first signaling is greater than 1.

7. The method according to any one of claims 1 to 6, wherein when a quantity of terminal devices paged by the first signaling is greater than 1, the first signaling comprises a plurality pieces of information about terminal devices, the plurality pieces of information about the terminal devices are sorted in a first order in the first signaling, and the first order is used to determine a resource.

8. The method according to claim 7, wherein that the plurality pieces of information about the terminal devices are sorted in a first order in the first signaling comprises:
when one NAS container in NAS containers comprised in the first signaling is used to carry information about one terminal device, the NAS containers are sorted in the first order in the first signaling;
when the quantity of NAS containers comprised in the first signaling is 1, the plurality pieces of information about the terminal devices are sorted in the first order in the NAS container; or
identifiers of the plurality of terminal devices are sorted in the first order in the first signaling.

9. The method according to any one of claims 1 to 8, wherein if the quantity of terminal devices paged by the first signaling is greater than 1, the method further comprises:
sending, by the first device, third signaling after completing data transmission with one of the plurality of terminal devices paged by the first signaling, wherein the third signaling is used to trigger a next terminal device in the plurality of terminal devices to send uplink data.

10. The method according to any one of claims 1 to 9, wherein the uplink data comprises the identifier of the first terminal device.

11. The method according to any one of claims 4 to 6, 8, or 9, wherein the identifier of the first terminal device is an electronic product code EPC, a system architecture evolution temporary mobile station identifier S-TMSI, or a 5th generation system architecture evolution temporary mobile station identifier 5G-S-TMSI.

12. A paging method, wherein the method is applied to a first terminal device and the method comprises:
receiving a first signal from a first device;
receiving first signaling from the first device, wherein the first signaling is used to page the first terminal device, the first signaling comprises information about the first terminal device, and the first signaling is used to determine a first resource; and
sending, based on an indication of the first signaling, uplink data to the first device in a first slot by using energy obtained by using the first signal, wherein the first slot belongs to the first resource.

13. The method according to claim 12, wherein the first terminal device works in a backscatter communication scenario.

14. The method according to claim 12 or 13, wherein
the first signaling comprises a second field, wherein when a value of the second field is a third value, it indicates that a quantity of terminal devices paged by the first signaling is 1, or when a value of the second field is a fourth value, it indicates that a quantity of terminal devices paged by the first signaling is greater than 1;
when the first signaling comprises a second field, it indicates that a quantity of terminal devices paged by the first signaling is 1, or when the first signaling does not comprise a second field, it indicates that a quantity of terminal devices paged by the first signaling is greater than 1;
when the first resource comprises one resource used for uplink data transmission, it indicates that a quantity of terminal devices paged by the first signaling is 1, or when the first resource comprises a plurality of resources used for uplink data transmission, it indicates that a quantity of terminal devices paged by the first signaling is greater than 1;
the first signaling comprises a NAS container, and the NAS container is used to carry the information about the first terminal device, wherein when a quantity of NAS containers is 1, it indicates that a quantity of terminal devices paged by the first signaling is 1, or when a quantity of NAS containers comprised in the first signaling is greater than 1, it indicates that a quantity of terminal devices paged by the first signaling is greater than 1; or
the information about the first terminal device is an identifier of the first terminal device, wherein when a quantity of terminal device identifiers comprised in the first signaling is 1, it indicates that a quantity of terminal devices paged by the first signaling is 1, or when a quantity of terminal device identifiers comprised in the first signaling is greater than 1, it indicates that a quantity of terminal devices paged by the first signaling is greater than 1.

15. The method according to any one of claims 12 to 14, wherein the method further comprises:
determining the first slot based on a location of the information about the first terminal device in the first signaling in a first order, wherein when the quantity of terminal devices paged by the first signaling is greater than 1, the first signaling comprises information about a plurality of terminal devices, and the plurality pieces of information about the terminal devices is sorted in the first order in the first signaling.

16. The method according to claim 15, wherein that the plurality pieces of information about the terminal devices are sorted in the first order in the first signaling comprises:
when one NAS container in NAS containers comprised in the first signaling is used to carry information about one terminal device, the NAS containers are sorted in the first order in the first signaling;
when the quantity of NAS containers comprised in the first signaling is 1, the plurality pieces of information about the terminal devices are sorted in the first order in the NAS container; or
identifiers of the plurality of terminal devices are sorted in the first order in the first signaling.

17. The method according to claim 15 or 16, wherein if the quantity of terminal devices paged by the first signaling is greater than 1,
the method further comprises: receiving third signaling, wherein the third signaling is used to trigger a next terminal device in the plurality of terminal devices paged by the first signaling to send uplink data; and
the sending uplink data to the first device in a first slot by using energy obtained by using the first signal comprises: if the third signaling is an N^{th} piece of signaling received by the first terminal device to trigger a next terminal device in the plurality of terminal devices paged by the first signaling to send uplink data, and N represents the location of the information about the first terminal device in the first order, sending the uplink data to the first device in the first slot by using the energy obtained by using the first signal, wherein the first slot is an N^{th} slot in the first resource, and N is a positive integer.

18. A communication apparatus, comprising a processor and a storage, wherein the storage is coupled to the processor, and the processor is configured to perform the method according to any one of claims 1 to 11, or is configured to perform the method according to any one of claims 12 to 17.

19. A computer-readable storage medium, wherein the computer-readable storage medium is configured to store a computer program, and when the computer program is run on a computer, the computer is enabled to perform the method according to any one of claims 1 to 11, or the computer is enabled to perform the method according to any one of claims 12 to 17.

20. A chip system, wherein the chip system comprises:
a processor and an interface, wherein the processor is configured to invoke instructions from the interface and run the instructions, and when executing the instructions, the processor implements the method according to any one of claims 1 to 11, or implements the method according to any one of claims 12 to 17.

21. A computer program product, wherein the computer program product comprises a computer program, and when the computer program is run on a computer, the computer is enabled to perform the method according to any one of claims 1 to 11, or the computer is enabled to perform the method according to any one of claims 12 to 17.
